# EUROPÄISCHE PATENTSCHRIFT

(11) **EP 0 923 980 B1**
(45) Veröffentlichungstag und Bekanntmachung des Hinweises auf die Patenterteilung: **26.03.2003**
(21) Anmeldenummer: 98123855.3
(22) Anmeldetag: 16.12.1998
(51) Int. Cl.: B01D 53/88, B01J 35/02, F23G 7/06, F23J 15/02

(54) **Katalysator zur katalytischen Nachverbrennung von Rauchgasen**
Catalyst for the catalytic post-combustion of exhaust gases
Catalyseur pour postcombustion catalytique des gaz d'échappement

(30) Priorität: 17.12.1997 DE 29722260 U
(43) Veröffentlichungstag der Anmeldung: 23.06.1999
(73) Patentinhaber: Horst, Günter, 32120 Hiddenhausen (DE)
(72) Erfinder: Horst, Günter, 32120 Hiddenhausen (DE)
(74) Vertreter: Busse & Busse Patentanwälte

(56) Entgegenhaltungen:
- EP-A- 0 206 067
- EP-A- 0 378 099
- WO-A-96/33017
- DE-A- 4 123 262
- DE-U- 9 320 680
- US-A- 4 743 578

## Beschreibung

Die Erfindung bezieht sich auf einen Katalysator zur katalytischen Nachverbrennung von Rauchgasen aus dem Brennraum von Feuerstätten, mit stabförmigen Katalysatorkörpern aus keramischem Material, die an ihrem anströmseitigen Ende mit einer Anspitzung versehen sind.

Ausgehend von einem bekannten Katalysator dieser Art (EP 0 378 099 B1) befaßt sich die Erfindung mit dem Problem einer auch bei hohen Rauchgastemperaturen über einen langen Zeitraum standfesten Abstützung der Katalysatorkörper in einem stromab des Brennraumes gelegenen Bereich der Feuerstelle bei zugleich verbesserter Nachverbrennung.

Die Erfindung löst das Problem durch einen Katalysator mit den Merkmalen des Anspruchs 1. Hinsichtlich weiterer Ausgestaltungen wird auf die Ansprüche 2 bis 6 verwiesen.

Durch die Vereinigung einer Mehrzahl von Katalysatorkörpern zu einer insgesamt aus keramischem Material bestehenden Baugruppe entfallen mit den Aufhängehaken für die einzelnen Katalysatorkörper und mit dem Stützgestell, an dem die Aufhängehaken angreifen, im Rauchgasstrom befindliche Stützteile aus Metall, die bei höheren Rauchgastemperaturen nur dann die notwendige Dauerstandfestigkeit haben, wenn sie aus hochwarmfesten Metallen bestehen, die jedoch hohe Gestehungskosten bedingen.

Durch ihre Vereinigung zu einer Baugruppe wird den Katalysatorkörpern zugleich ein bestimmter gegenseitiger Abstand und eine feste gegenseitige Ausrichtung vorgegeben, wobei die Stege die wirksame Katalysatorfläche vergrößern. Die Baugruppen erleichtern den Aufbau einer aus nebeneinander und/oder übereinander angebrachten Baugruppen bestehenden Katalysatoranordnung, bei der die Katalysatorkörper innerhalb des von Raugasen durchquerten Strömungsquerschnitts der Rauchgasführung eine vorgegebene Verteilung einnehmen können. Dabei sind die Baugruppen mit ihren Enden an jeweils gegenüberliegenden Wandungen abstützbar und können die Distanz zwischen den gegenüberliegenden Wandungen ohne Zwischenabstützung überbrücken.

Weitere Einzelheiten und Wirkungen ergeben sich aus der nachfolgenden Beschreibung und der Zeichnung, in der mehrere Ausführungsbeispiele des Gegenstands der Erfindung schematisch näher veranschaulicht sind. In der Zeichnung zeigen:
- Fig. 1: eine perspektivische Gesamtansicht einer Baugruppe nach der Erfindung,

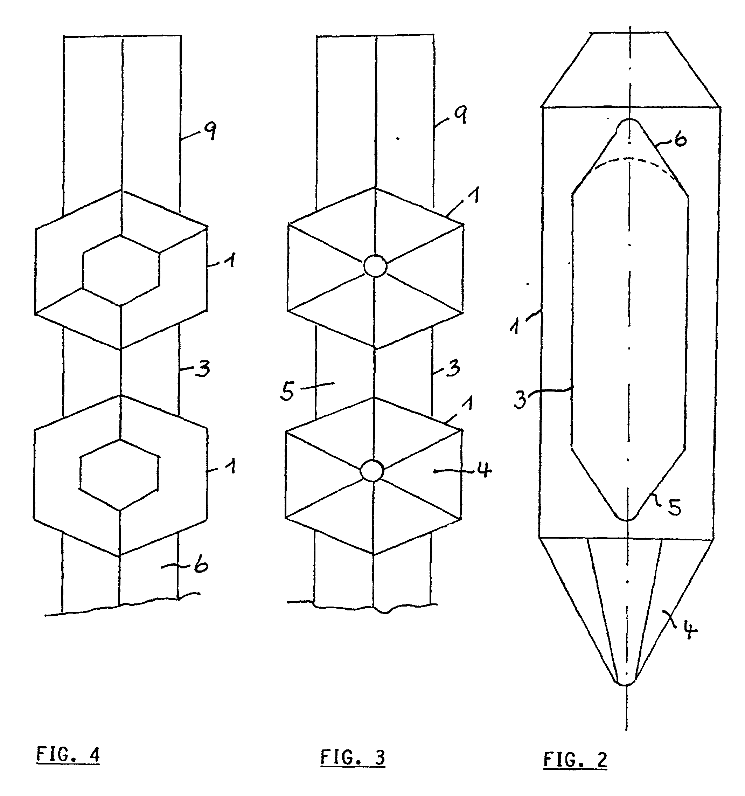

- Fig. 2: eine Stirnansicht der Baugruppe nach Fig. 1,
- Fig. 3 und 4: abgebrochene Ansichten auf einen Endbereich von Baugruppen von unten bzw. von oben zur Veranschaulichung unterschiedlicher Ausführungen der Katalysatorkörper,

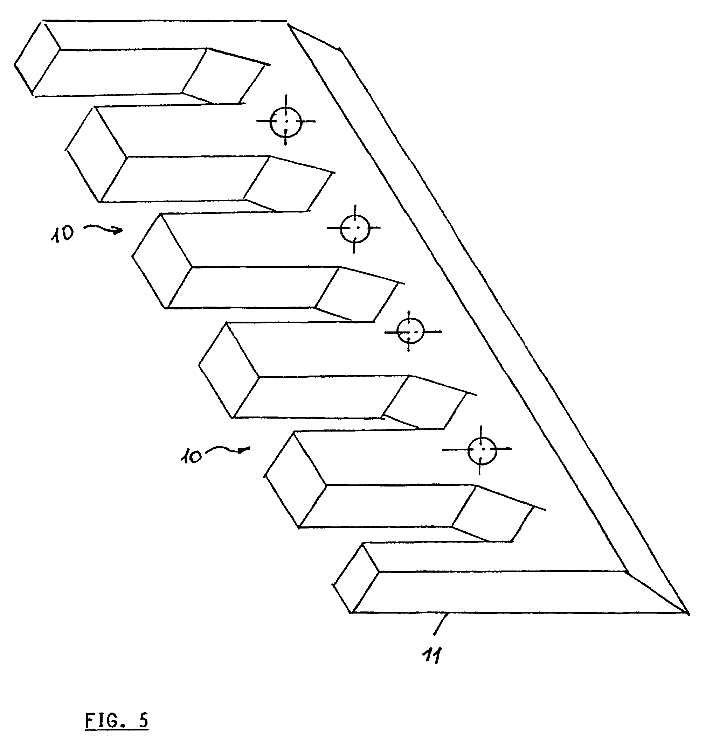

- Fig. 5: einen wandseitig befestigbaren Stützkörper aus warmfestem Metallguß, und

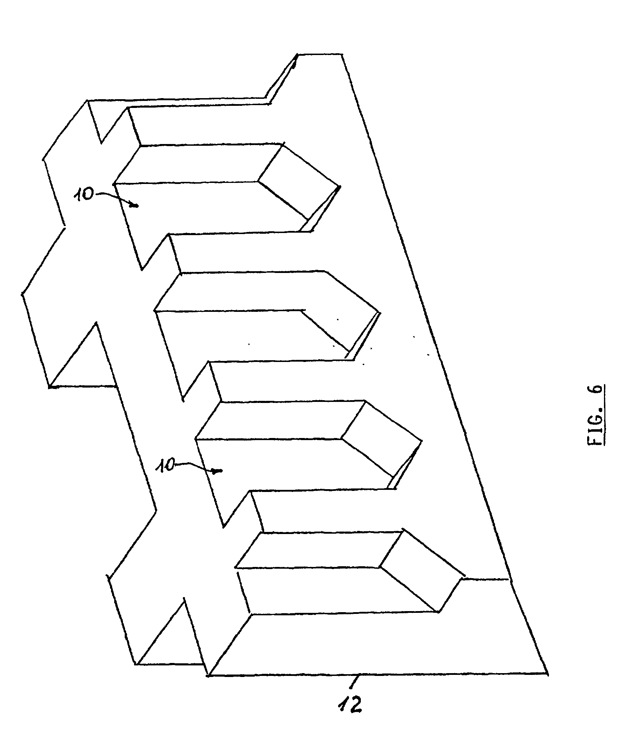

- Fig. 6: einen Stützkörper ähnlich Fig. 5 in einer Ausführung als Formstein aus Schamotte.

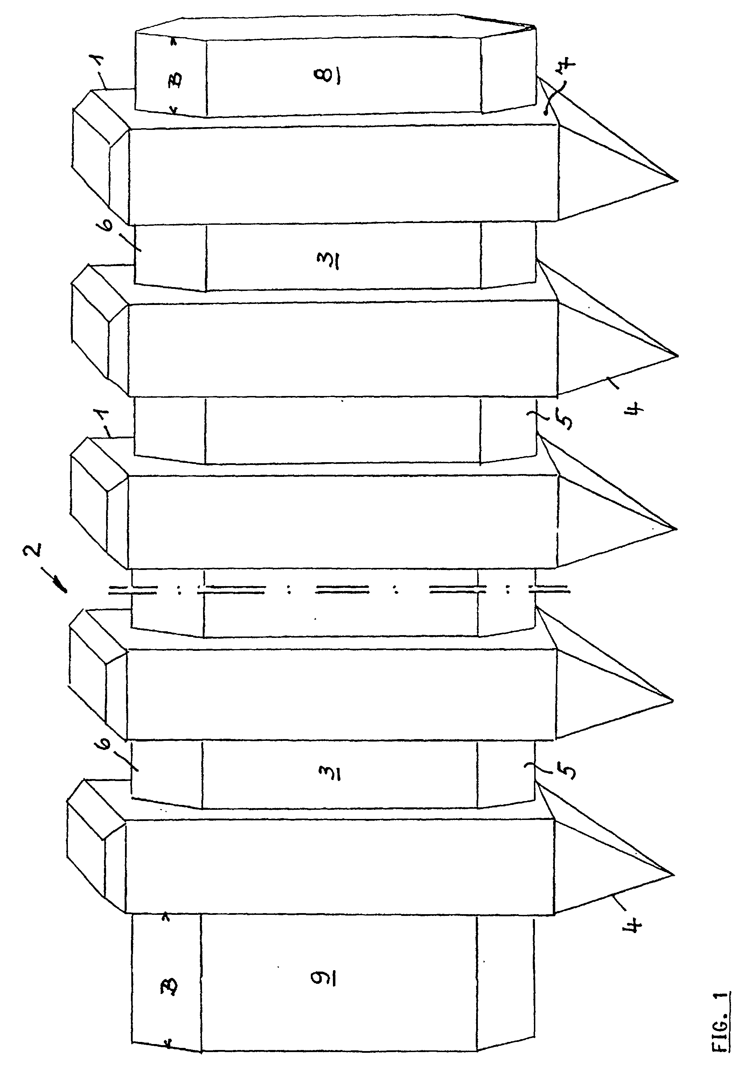

Wie der Fig. 1 entnommen werden kann, bilden eine Anzahl von stabförmigen, untereinander gleichen Katalysatorkörpern 1 eine Baugruppe 2, in der die Katalysatorkörper 1 durch keramische Zwischenstege 3 verbunden sind. Die parallel zueinander angeordneten Katalysatorkörper 1 können wie dargestellt einen untereinander gleichen Abstand aufweisen, statt dessen jedoch auch unterschiedliche Abstände zueinander haben. So können beispielsweise die Abstände zwischen den Katalysatorkörpern 1 zu den Enden einer Baugruppe 2 hin größer werden, so daß im Mittelbereich eines von Rauchgasen passierten Strömungsquerschnitts die Anordnung der Katalysatorkörper 1 dichter ist.

Die Katalysatorkörper 1 haben an ihrem anströmseitigen Ende eine Anspitzung 4, während sie an ihrem abströmseitigen Ende in einem im wesentlichen stumpfen Abschnitt auslaufen. Sie können wie dargestellt einen mehreckigen, z.B. vier- oder sechseckigen Querschnitt haben, können jedoch statt dessen auch im wesentlichen zylindrisch oder elliptisch ausgebildet sein.

Die Zwischenstege 3 haben auf der Seite der angespitzten Enden 4 der Katalysatorkörper 1 eine keilförmige Anschärfung 5, um den Strömungswiderstand herabzusetzen und einen Anströmbereich darzubieten, der sich besonders schnell auf eine Temperatur erwärmt, wie sie für die Auslösung einer katalystischen Nachverbrennung erwünscht ist. An ihrem anderen Ende können die Zwischenstege 3 eine keilförmige Verjüngung 6 aufweisen oder mit einer Abrundung versehen sein, um das Abströmen der Rauchgase zu begünstigen.

An der Außenseite 7 des jeweils am Außenende der Baugruppe befindlichen Katalysatorkörpers 1 ist jeweils ein den Zwischenstegen 3 in der Form entsprechender, frei vorspringender Ansatzsteg 8,9 vorgesehen. Die Ansatzstege 8,9 haben eine wie dargestellt unterschiedliche Breite B, wobei das Unterschiedsmaß zwischen den Breiten B der Ansatzstege 8,9 bevorzugt etwa dem halben Mittenabstand zwischen benachbarten Katalysatorkörpern 1 der Baugruppe 2 entspricht. Dies ermöglicht es, bei einer Abstützung der Baugruppe in Einhängetaschen 10 eines Stützkörpers 11 oder 12 die nebeneinander und/oder übereinander bzw. hintereinander angeordneten Baugruppen 2 so einander zuzuordnen, daß die Katalysatorkörper 1 benachbarter Baugruppen 2 zueinander auf Lücke versetzt sind. Hierzu genügt es, die Baugruppen 2 abwechselnd mit dem Ansatzsteg 8 und dem Ansatzsteg 9 jeweils in den jeweils gleichseitigen Stützkörper 11 oder 12 einzusetzen. Die Stützkörper 11,12 können wandseitig Anbringung finden und, wie beispielsweise der Stützkörper 11, aus Metallguß bestehen oder, wie beispielsweise der Stützkörper 12, als Formstein aus Schamotte ausgebildet sein.

Die Stege 3,8,9 und die Katalysatorkörper 1 bestehen vorzugsweise aus dem gleichen keramischen Werkstoff, der mit Beimengungen, beispielsweise Eisenoxid-Partikeln, versetzt sein kann, die die katalytische Nachverbrennung begünstigen. Statt dessen oder zusätzlich können die Teile der Baugruppe 2 auch mit einer oberflächigen Beschichtung aus einem Material, daß die katalytische Nachverbrennung begünstigt, versehen sein.

## Patentansprüche

1. Katalysator zur katalytischen Nachverbrennung von Rauchgasen aus dem Brennraum von Feuerstätten, mit stabförmigen Katalysatorkörpern (1) aus keramischem Material, die an ihrem anströmseitigen Ende mit einer Anspitzung versehen sind, **dadurch gekennzeichnet, daß** eine Mehrzahl von gleichförmigen Katalysatorkörpem (1) im Abstand parallel nebeneinander durch keramische Zwischenstege (3) zu einer integralen Baugruppe (2) vereinigt sind, die mit ihren Enden an jeweils gegenüber liegenden Wandungen abstützbar ist.

2. Katalysator nach Anspruch 1, **dadurch gekennzeichnet, daß** die Zwischenstege (3) untereinander gleichförmig sind und an ihrer den angespitzten Enden der Katalysatorkörper zugewandten Seite eine keilförmige Anschärfung (5) aufweisen.

3. Katalysator nach Anspruch 1 oder 2, **dadurch gekennzeichnet, daß** die Zwischenstege (3) an ihrer den angespitzten Enden (4) der Katalysatorkörper (1) abgewandten Seite eine keilförmige Verjüngung (6) aufweisen.

4. Katalysator nach einem der Ansprüche 1 bis 3, **dadurch gekennzeichnet, daß** an der Außenseite (7) des jeweils am Außenende der Baugruppe befindlichen Katalysatorkörpers (1) ein den Zwischenstegen (3) entsprechender, frei vorspringender Ansatzsteg (8,9) zur endseitigen Abstützung der Baugruppe (2) in einer den Ansatzstegen (8,9) der Baugruppe (2) entsprechenden Einhängetasche (10) eines Stützkörpers (11,12) vorgesehen ist.

5. Katalysator nach Anspruch 4, **dadurch gekennzeichnet, daß** die Ansatzstege (8,9) eine unterschiedliche Breite (B) aufweisen.

6. Katalysator nach Anspruch 5, **dadurch gekennzeichnet, daß** das Unterschiedsmaß zwischen den Breiten (B) der Ansatzstege (8,9) etwa dem halben Mittenabstand zwischen benachbarten Katalysatorkörpern (1) der Baugruppe (2) entspricht.

## Claims

1. Catalyst for the catalytic post-combustion of exhaust gases from the combustion chamber of fireplaces, with rod-shaped catalyst elements (1) of ceramic material which are provided at their feed end with a point, **characterised in that** a plurality of uniform catalyst elements (1), running at a certain distance from each other and parallel with each other, are combined by means of ceramic intermediate webs (3) to form an integral assembly (2) which can be supported at its ends on opposing walls.

2. Catalyst according to claim 1, **characterised in that** the intermediate webs (3) are uniform in shape, relative to each other, and exhibit a wedge-shaped protrusion (5) on their sides facing the pointed ends of the catalyst element.

3. Catalyst according to claim 1 or 2, **characterised in that** the intermediate webs (3) exhibit a wedge-shaped reduction (6) on their sides facing away from the pointed ends (4) of the catalyst element (1).

4. Catalyst according to one of claims 1 to 3, **characterised in that** a freely projecting lug (8, 9), corresponding to the intermediate webs (3), is provided on the outside (7) of the catalyst element (1) located at the outer end of the assembly, for the end support of the assembly (2), in a suspended pocket (10) of a supporting element (11, 12) corresponding to the lugs (8, 9) of the assembly (2).

5. Catalyst according to claim 4, **characterised in that** the lugs (8, 9) exhibit different widths (B).

6. Catalyst according to claim 5, **characterised in that** the difference between the widths (B) of the lugs (8, 9) is approximately equal to half the centre to centre distance between adjacent catalyst elements (1) of the assembly (2).

## Revendications

1. Catalyseur destiné à la postcombustion catalytique de fumées provenant de la chambre de combustion de foyers, comportant des corps de catalyseur (1) sous forme de barres en matériau céramique, qui sont pourvus d'une pointe sur leur extrémité située en amont, **caractérisé en ce qu'**une pluralité de corps de catalyseur (1) égaux, à distance et parallèles les uns à côté des autres sont réunis par des âmes intermédiaires (3) céramiques en un assemblage (2) intégral qui par ses extrémités peut s'appuyer sur des parois à chaque fois opposées.

2. Catalyseur selon la revendication 1, **caractérisé en ce que** les âmes intermédiaires (3) sont égales les unes par rapport aux autres et présentent à leur côté tourné vers les extrémités des corps de catalyseur rendues pointues un affilage (5) en forme de coin.

3. Catalyseur selon la revendication 1 ou 2, **caractérisé en ce que** les âmes intermédiaires (3) présentent à leur côté opposé aux extrémités rendues pointues (4) des corps de catalyseur (1) un rétrécissement (6) en forme de coin.

4. Catalyseur selon l'une quelconque des revendications 1 à 3, **caractérisé en ce que** sur le côté extérieur (7) de chaque corps de catalyseur (1) situé à l'extrémité extérieure de l'assemblage une âme d'embout (8, 9) saillant librement, correspondant aux âmes intermédiaires (3) est prévue pour supporter l'assemblage (2) aux extrémités, dans une poche d'accrochage (10) d'un corps d'appui (11, 12), correspondant aux âmes d'embout (8, 9) de l'assemblage (2).

5. Catalyseur selon la revendication 4, **caractérisé en ce que** les âmes d'embout (8, 9) présentent une largeur (B) différente.

6. Catalyseur selon la revendication 5, **caractérisé en ce que** la mesure différentielle entre les largeurs (B) des âmes d'embout (8, 9) correspond environ à la moitié de la distance axiale entre des corps de catalyseur (1) voisins de l'assemblage (2).
